# EUROPEAN PATENT APPLICATION

(11) **EP 4 542 751 A2**
(43) Date of publication of application: **23.04.2025**
(21) Application number: 24206878.1
(22) Date of filing: 16.10.2024
(51) Int. Cl.: H01M 50/342

(54) **BATTERY WITH NO ROLL GROOVE**

(30) Priority: 18.10.2023 CN 202311351926
(71) Applicant: Techtronic Cordless GP, Anderson, SC 29621 (US)
(72) Inventor: YI, Ding Xing, Dongguan City (CN); HAN, Zhi Qing, Dongguan City (CN)
(74) Representative: Novagraaf Group

(57) **Abstract**

The present invention relates to a battery with no roll groove. The battery with no roll groove comprises a cap, an outer washer, a casing and a rolled core, wherein the rolled core is accommodated in the casing, and the cap is electrically connected to the rolled core; a top portion of the casing is bent inward and tightly presses the outer washer against the cap, thereby fixing the rolled core in the casing; the casing has no roll groove structure. The outer washer comprises an outer washer top portion, the outer washer top portion being an annular structure, and the cap being exposed through a central round opening; and an outer washer bottom portion, disposed between the cap and the casing. The present invention reduces the overall height of structures such as the cap while effectively fixing and sealing the battery rolled core, so as to increase the height of the rolled core and the amount of electrolyte injected, and thereby increase the total capacity of the battery, while also reducing production costs.

## Description

### Technical field

The present invention relates to the field of batteries, in particular to a battery with no roll groove.

### Background art

Batteries serve as energy supply units for all kinds of electronic equipment and products. To ensure the long-term operation of electronic devices, batteries are required to have high energy density and battery capacity. A conventional battery mainly comprises a cap, a casing, a rolled core and electrolyte. For a given battery volume, in order to increase the utilization rate of space inside the battery housing (which includes increasing the height of the rolled core and the amount of electrolyte injected), the proportion of the height taken up by structures such as the cap must be minimized.

In existing battery structure designs, the cap is generally connected to the rolled core via an extension part (tab) of the positive electrode collector plate; and in the process of installing the cap, the tab needs to be folded, so as to be accommodated between the cap and the rolled core, but this will take up height within the battery. In addition, in existing battery structure designs, a roll groove is generally provided on the battery casing, the roll groove being located at a position between the rolled core and the cap, and used for fixing the rolled core inside the casing so that the rolled core does not wobble. In an existing roll grooving process, a hobbing cutter is generally brought into contact with a rolling battery casing, so as to roll an annular groove on the battery casing. In such a method, it is necessary to control a transverse squeezing rate and a longitudinal downward pressing rate, which might result in twisting damage to the tab and breakage of the casing, thus making the battery unsafe. At the same time, the roll groove structure will also take up height within the battery, affecting the height of the rolled core and the amount of electrolyte injected, and thus reducing the overall capacity of the battery.

Thus, there is a need to provide a battery with no roll groove, to at least partially solve the abovementioned problems.

### Summary of the invention

An objective of the present invention is to provide a battery with no roll groove, allowing the overall height of structures such as a cap to be reduced while effectively fixing and sealing a battery rolled core, so as to increase the height of the rolled core and the amount of electrolyte injected, and thereby increase the total capacity of the battery. The no-roll-groove design employed in the present invention reduces the risk of battery casing breakage, and also eliminates a roll grooving process step, thus reducing production costs. At the same time, the present invention uses a novel collector plate structure and a novel method of connecting same to the cap, thus simplifying the collector plate structure and avoiding significant deformation of the collector plate, as well as increasing a weld area of the collector plate, thus increasing overcurrent capacity.

According to one aspect of the present invention, a battery is provided, comprising: a cap, an outer washer, a casing and a rolled core,
wherein the rolled core is accommodated in the casing, and the cap is electrically connected to the rolled core;
a top portion of the casing is bent inward and tightly presses the outer washer against the cap, thereby fixing the rolled core in the casing;
the casing has no roll groove structure.

In an embodiment, the outer washer comprises:
an outer washer top portion, the outer washer top portion being an annular structure, and the cap being exposed through a central round opening;
an outer washer bottom portion, disposed between the cap and the casing.

In an embodiment, the cap comprises:
a top cover;
an anti-explosion valve plate, the anti-explosion valve plate being provided below the top cover and electrically connected to the top cover;
a perforated plate, the perforated plate being provided below the anti-explosion valve plate; the perforated plate and the anti-explosion valve plate being electrically connected at a central position, and separated by a gap at a peripheral position;
an inner washer, the inner washer being used to seal the gap between the peripheries of the anti-explosion valve plate and the perforated plate.

In an embodiment, the perforated plate, the top cover and the anti-explosion valve plate have successively decreasing peripheral dimensions.

In an embodiment, the inner washer comprises an inner washer bottom portion and an inner washer side wall; the inner washer bottom portion is an annular structure, and a top portion of the inner washer side wall is press-fitted against a lower surface of the top cover.

In an embodiment, a height of the inner washer side wall is slightly greater than a thickness of the anti-explosion valve plate, and an inside diameter of the inner washer side wall is slightly smaller than a diameter of the anti-explosion valve plate.

In an embodiment, the outer washer further comprises an outer washer side wall, the outer washer side wall being used to connect the outer washer top portion and the outer washer bottom portion.

In an embodiment, the periphery of the top cover is provided with an annular upward protruding edge, and a top portion of the protruding edge is press-fitted against a lower surface of the outer washer top portion.

In an embodiment, the top portion of the casing is bent inward and tightly presses the outer washer against the top portion of the protruding edge and an upper surface of the top cover located close to the protruding edge.

In an embodiment, the lower surface of the outer washer top portion is provided with an annular downward protrusion, the protrusion being located at an inner side of the protruding edge.

In an embodiment, the top portion of the casing is bent inward and tightly presses the protrusion against a side wall of the protruding edge.

In an embodiment, an outer diameter of an upper part of the outer washer is smaller than an outer diameter of a lower part thereof, and an outer surface of the upper part of the outer washer is connected to an outer surface of the lower part thereof by an oblique face.

In an embodiment, after the casing is bent, the outer washer has a part projecting beyond the casing.

In an embodiment, an upward recess is provided at a central position on the anti-explosion valve plate, a downward recess is provided at a central position on the perforated plate, the downward recess and the upward recess are connected by welding, and the upward recess or the downward recess has a boss structure.

In an embodiment, a thickness of the inner washer bottom portion is slightly greater than a height of the boss structure.

In an embodiment, an annular anti-explosion groove is provided on an upper surface of the anti-explosion valve plate.

In an embodiment, the anti-explosion valve plate and the top cover are connected by a line weld, the line weld being continuous or segmented.

In an embodiment, the battery further comprises a positive electrode collector plate, the positive electrode collector plate comprising a rolled core connecting part and a cap connecting part, the cap connecting part being located at the periphery of the rolled core connecting part.

In an embodiment, an annular ridge is provided on the cap connecting part.

In an embodiment, the perforated plate and the ridge are connected by welding, and a weld trace is located on the ridge.

In an embodiment, the perforated plate and the cap connecting part of the positive electrode collector plate are connected by welding.

### Brief description of the drawings

For a better understanding of the abovementioned and other objectives, features, advantages and functions of the present invention, the preferred embodiments shown in the drawings may be referred to. In the drawings, identical reference labels denote identical components. Those skilled in the art should understand that the drawings are intended to illustrate preferred embodiments of the present invention schematically without limiting the scope of the present invention in any way, and the components in the drawings are not drawn to scale.
Fig. 1 is a structural schematic drawing of a battery with no roll groove according to a preferred embodiment of the present invention.
Fig. 2 is an exploded drawing of a battery with no roll groove according to a preferred embodiment of the present invention.
Fig. 3 is a sectional drawing of a battery with no roll groove according to a preferred embodiment of the present invention.
Fig. 4 is a sectional drawing of a cap according to a preferred embodiment of the present invention.
Fig. 5 is a structural schematic drawing (top view) of a perforated plate according to a preferred embodiment of the present invention.
Fig. 6 is a structural schematic drawing (bottom view) of a perforated plate according to a preferred embodiment of the present invention.
Fig. 7 is a structural schematic drawing of a positive electrode collector plate according to a preferred embodiment of the present invention.
Fig. 8 is a structural schematic drawing of a positive electrode collector plate according to another preferred embodiment of the present invention.
Fig. 9 is a structural schematic drawing of a positive electrode collector plate according to another preferred embodiment of the present invention.

Key to the drawings:
1 cap
11 top cover
111 protruding edge
112 line weld
12 anti-explosion valve plate
121 upward recess
122 boss structure
13 perforated plate
131 downward recess
132 perforated plate anti-explosion groove
133 weld trace
14 inner washer
141 inner washer bottom portion
142 inner washer side wall
2 casing
3 rolled core
4 positive electrode collector plate
41 rolled core connecting part
42 cap connecting part
421 ridge
5 negative electrode collector plate
6 outer washer
61 outer washer top portion
62 outer washer side wall
63 outer washer bottom portion
64 protrusion
65 oblique face

### Detailed description of embodiments

Now referring to the drawings, particular embodiments of the present invention are described in detail. The embodiments described here are merely preferred embodiments of the present invention; based on these preferred embodiments, those skilled in the art will be able to think of other ways of implementing the present invention, which likewise fall within the scope of the present invention. In some embodiments, to avoid confusion with the present invention, certain technical features that are commonly known in the art are not described.

Unless otherwise defined, all technical and scientific terms used in the present invention have the same meanings as commonly understood by those skilled in the art. In case of conflict, the present invention (including definitions) shall prevail. Only exemplary methods and materials are described below; methods and materials similar or equivalent to those described in the present invention may all be used for experiments or tests of the present invention. The materials, methods and examples disclosed in the present invention are merely illustrative, and not intended to be limiting. Statements of numerical ranges in the present invention explicitly anticipate every intermediate number therein with the same precision.

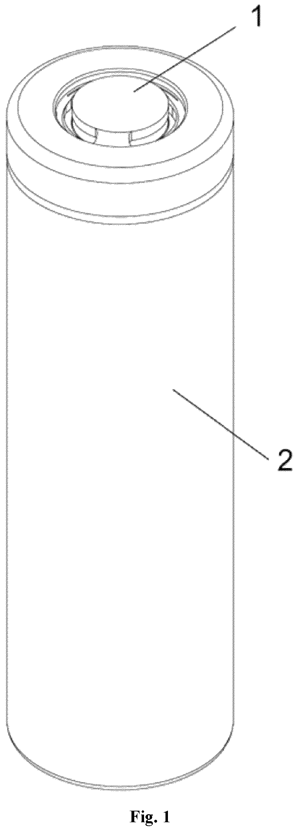

Figs. 1-9 show preferred embodiments of the battery with no roll groove according to the present invention. It should first be explained that directional and positional terms in the present invention should be understood as meaning relative directions and positions, rather than absolute directions and positions. Directional and positional terms in the present invention may be interpreted with reference to the exemplary structures shown in Figs. 1 - 9.

In existing battery structure designs, a roll groove structure is generally provided on a battery casing, for fixing a rolled core inside the casing so that the rolled core does not wobble. In addition, in existing battery structure designs, a cap is connected to the rolled core via a tab, which needs to be accommodated between the cap and the rolled core by folding. In an existing roll groove process, a hobbing cutter is generally brought into contact with the rolling battery casing, which might result in twisting damage to the tab and breakage of the casing. At the same time, the roll groove and the tab fold will also affect the height of the rolled core and the amount of electrolyte injected, thus reducing the overall capacity of the battery.

In response to these technical problems, the present invention provides a battery with no roll groove. Referring to Figs. 1 - 3, a battery with no roll groove in a preferred embodiment of the present invention comprises a cap 1, an outer washer 6, a casing 2 and a rolled core 3, wherein the rolled core 3 is accommodated in the casing 2, and the cap 1 is electrically connected to the rolled core 3; a top portion of the casing 2 is bent inward and tightly presses the outer washer 6 against the cap 1, thereby fixing the rolled core 3 in the casing 2; the casing 2 has no roll groove structure.

It should be explained that although Figs. 1 - 9 all show cylindrical battery caps, those skilled in the art will understand that the structure of the battery with no roll groove according to the present invention is likewise suitable for square batteries. In the case of a square battery, all that need be done is to convert the structures in the drawings from a round shape to a corresponding square shape. In the process of conversion, in order to ensure that the technical effects of the present invention are achieved, the square structure will be suitably adjusted; for example, when the outer washer 6 is converted from an annular shape to a square shape, the sealing thereof must be ensured through structural design. The conversion and adjustment described above are conventional operations of those skilled in the art, requiring no inventive effort.

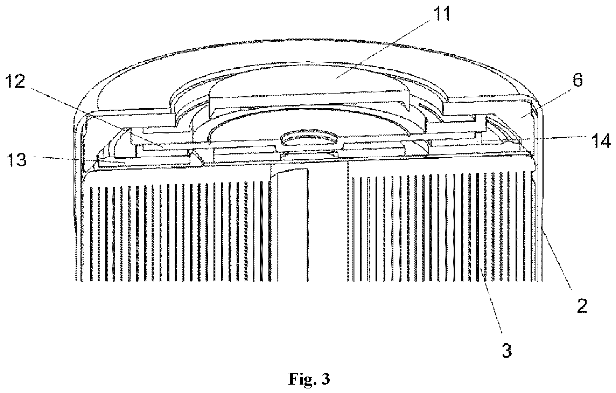

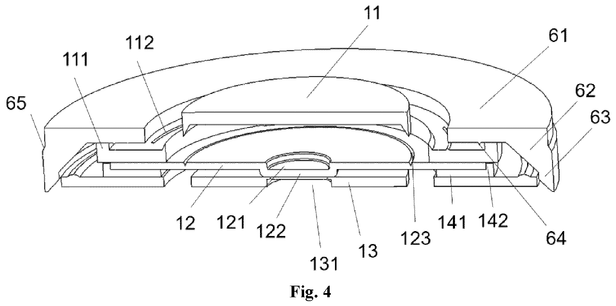

Referring to Figs. 3 and 4, in an embodiment, the cap 1 of the present invention comprises: a top cover 11; an anti-explosion valve plate 12, the anti-explosion valve plate 12 being provided below the top cover 11, and electrically connected to the top cover 11; a perforated plate 13, the perforated plate 13 being provided below the anti-explosion valve plate 12; the perforated plate 13 and the anti-explosion valve plate 12 being electrically connected at a central position, and separated by a gap at a peripheral position; and an inner washer 14, the inner washer 14 being used to seal the gap between the peripheries of the anti-explosion valve plate 12 and the perforated plate 13.

In the prior art, a peripheral dimension of the anti-explosion valve plate is generally larger than a peripheral dimension of the top cover, and the periphery of the anti-explosion valve plate covers the periphery of the top cover, so as to achieve better sealing, but this also increases the height of the anti-explosion valve plate. In contrast, in a preferred embodiment, the perforated plate 13, the top cover 11 and the anti-explosion valve plate 12 of the present invention have successively decreasing peripheral dimensions, as shown in Figs. 3 and 4. As will be described in detail below, these dimensional designs can meet sealing requirements and also minimize the height of the cap.

The peripheral dimension referred to in the present invention means a dimension of an outer edge of a component; this corresponds to diameter in the case of a cylindrical battery, and corresponding side length in the case of a square battery. As shown in Fig. 3, the inner washer 14 is used to seal the gap between the peripheries of the anti-explosion valve plate 12 and the perforated plate 13, i.e. ensure sealing between edges of the anti-explosion valve plate 2 and the perforated plate 3. In addition, the electrical connection referred to in the present invention means an electrically conductive connection between two components, and needs to have a certain connection strength. For example, a connection is formed by welding, or by bonding with an electrically conductive adhesive, etc. No restrictions are imposed here; in a preferred embodiment, a welded connection is employed.

To achieve a better sealing effect, as shown in Figs. 3 and 4, in a preferred embodiment, the inner washer 14 comprises an inner washer bottom portion 141 and an inner washer side wall 142; the inner washer bottom portion 141 is an annular structure, and a top portion of the inner washer side wall 142 is press-fitted against a lower surface of the top cover 11. The inner washer 14 can accommodate the anti-explosion valve plate 12. In a preferred embodiment, a height of the inner washer side wall 142 is slightly greater than a thickness of the anti-explosion valve plate 12, i.e. the inner washer side wall 142 will apply a certain compression force to the top cover 11, so as to improve sealing between the anti-explosion valve plate 12 and the top cover 11. An inside diameter of the inner washer side wall 142 is slightly smaller than a diameter of the anti-explosion valve plate 12, i.e. the inner washer side wall 142 applies a compression force to the anti-explosion valve plate 12, so as to effectively fix the anti-explosion valve plate 12, and improve the sealing thereof.

Continuing to refer to Figs. 1 - 3, in an embodiment, a roll groove structure is omitted from the casing 2 in the present invention; instead, the outer washer 6 is used to seal a gap between the cap 1 and the casing 2 and simultaneously fix the rolled core 3. Thus, requirements for fixing the rolled core and sealing the battery can be met. The structure of the outer washer 6 need not be specifically defined, as long as it is able to meet the abovementioned requirements. In a preferred embodiment of the present invention, referring to Figs. 3 and 4, the outer washer 6 comprises: an outer washer top portion 61, the outer washer top portion 61 being an annular structure, and the cap 1 being exposed through a central round opening (i.e. the central round opening is used for positioning the top cover 11 of the cap 1); and an outer washer bottom portion 63, disposed between the cap 1 and the casing 2. In a preferred embodiment, the outer washer bottom portion 63 is provided with an annular chamfer inclined toward the inside of the washer, for pressing against the periphery of a top portion of the perforated plate 13 and/or the rolled core 3. In addition, the outer washer 6 further comprises an outer washer side wall 62, the outer washer side wall 62 being used to connect the outer washer top portion 61 and the outer washer bottom portion 63.

As shown in Figs. 3 and 4, the present invention does not specifically define the dimensions of the round opening of the outer washer top portion 61, as long as it allows the top cover 11 to be positioned without affecting the discharge of gas when there is high pressure inside the battery. Regarding the annular chamfer, inclined toward the inside of the washer, which is provided on the outer washer bottom portion 63, the rolled core 3 can be fixed and the casing 2 can be sealed in the following three ways by adjusting the dimensions of the rolled core 3, the perforated plate 13 and the chamfer: a. the chamfer presses against the periphery of the top portion of the rolled core 3, i.e. the chamfer is inserted downward into and seals a gap between the casing 2 and the periphery of the top portion of the rolled core 3; b. the chamfer presses against the periphery of the top portion of the perforated plate 13, i.e. the chamfer is inserted downward into and seals a gap between the casing 2 and the periphery of the top portion of the perforated plate 13, pressing down against the perforated plate 13 and thereby pressing against the rolled core 3, so as to fix the rolled core 3; c. the chamfer simultaneously presses against the peripheries of the top portions of the rolled core 3 and the perforated plate 13, i.e. the chamfer is inserted downward into and seals the gap between the casing 2 and the periphery of the top portion of the rolled core 3 and the gap between the casing 2 and the periphery of the top portion of the perforated plate 13 simultaneously, pressing down against the rolled core 3 and the perforated plate 13 simultaneously to achieve double fixing of the rolled core 3. The pressing action of the inclined chamfer of the outer washer bottom portion 63 described above fixes the rolled core 3 to prevent it from wobbling in the casing, and the inclined chamfer is also able to seal the gap between the casing 2 and the outer periphery of the top portion of the rolled core 3 and/or the perforated plate 13; at the same time, the rolled core 3 and/or the perforated plate 13 apply an upward action force to the outer washer 6, to achieve sealing between the outer washer top portion 61 and the top portion of the casing 2, and between the outer washer side wall 62 and a side wall of the casing 2.

In a preferred embodiment, as shown in Fig. 3, to improve the supporting strength and sealing action of the outer washer bottom portion 63, and enable the outer washer side wall 62 to press the side wall of the casing 2 in an outward direction and thus achieve a better sealing effect when acted upon by the upward action force applied by the rolled core 3 and/or the perforated plate 13, a cross section of the outer washer side wall 62 is an approximately triangular structure, i.e. a solid reinforcing oblique face is provided at an inner side of the outer washer top portion 61 and the outer washer bottom portion 63. The angle of the oblique face need not be specifically defined, as long as the abovementioned effect can be achieved. In addition, to further increase the supporting strength and the sealing action, in a preferred embodiment, an outer diameter of an upper part of the outer washer 6 is smaller than an outer diameter of a lower part thereof, and an outer surface of the upper part of the outer washer 6 is connected to an outer surface of the lower part thereof by an oblique face 65.

To achieve a better sealing effect, as shown in Fig. 4, in a preferred embodiment, the periphery of the top cover 11 is provided with an annular upward protruding edge 111, and a top portion of the protruding edge 111 is press-fitted against a lower surface of the outer washer top portion 61. The present invention does not specifically define a thickness and height of the protruding edge 111, as long as the abovementioned sealing effect can be achieved. In an embodiment, the top portion of the casing 2 is bent inward and tightly presses the outer washer 6 against the top portion of the protruding edge 111 and an upper surface of the top cover 11 located close to the protruding edge 111; such a design enables the outer washer top portion 61 and the top cover 11 to have a larger contact area, so as to achieve a better sealing effect.

In coordination with the use of the protruding edge 111, as shown in Fig. 4, in a preferred embodiment, the lower surface of the outer washer top portion 61 is provided with an annular downward protrusion 64, the protrusion 64 being located at an inner side of the protruding edge 111. Preferably, the position of the protrusion 64 corresponds to the protruding edge 111. The protrusion 64 has a limiting action on the protruding edge 111, and further has a limiting action on the top cover 11, as well as cooperating with the protruding edge 111 to accomplish a further sealing effect. In an embodiment, the top portion of the casing 2 is bent inward and tightly presses the protrusion 64 against a side wall of the protruding edge 111, so as to achieve a better sealing effect.

Continuing to refer to Fig. 3, in a preferred embodiment, after the casing 2 is bent, the outer washer 6 has a part projecting beyond the casing 2, i.e. a diameter of the central round opening of the outer washer top portion 61 is smaller than a diameter of a round opening formed by the top portion of the casing 2 after being bent inward. The projecting part need not be very large; it need only project slightly beyond the casing 2.

Regarding the structure in which the perforated plate 13 and the anti-explosion valve plate 12 are electrically connected at a central position and separated by a gap at a peripheral position, this need not be specifically defined, as long as the abovementioned functions can be performed. For example, the anti-explosion valve plate 12 may employ a prior-art structure of being sunk downwards as a whole.

To achieve a better anti-explosion effect, in a preferred embodiment, as shown in Figs. 3 and 4, an upward recess 121 that opens upward is provided at a central position on the anti-explosion valve plate 12; a downward recess 131 that opens downward is provided at a central position on the perforated plate 13; the downward recess 131 and the upward recess 121 are electrically connected (i.e. forming a current interrupt device CID); and the upward recess 121 or the downward recess 131 has a boss structure 122, such that the anti-explosion valve plate 12 and the perforated plate 13 are separated by a gap (the gap allowing the entry of gas produced when an abnormality develops in the battery so as to activate the CID, while the separating action of the inner washer 14 prevents further contact between the anti-explosion valve plate and the perforated plate after the CID opens, which would make it impossible to break the current).

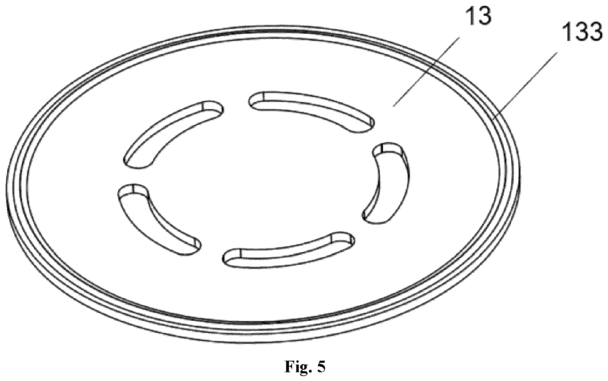

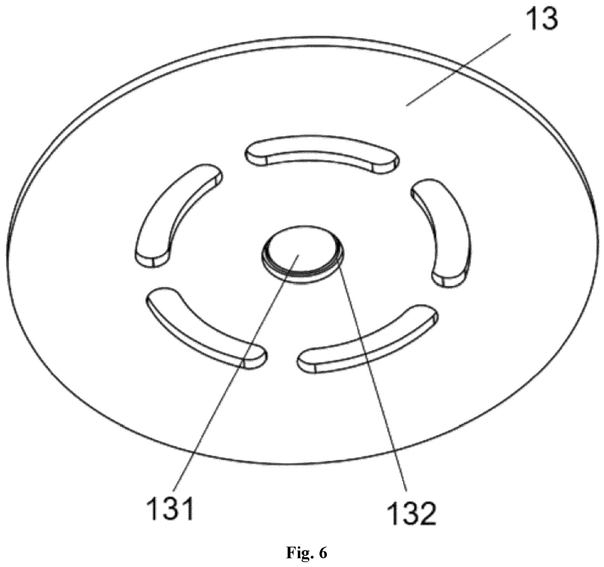

Continuing to refer to Figs. 3-6, the purpose of the boss structure 122 is to produce a gap between the anti-explosion valve plate 12 and the perforated plate 13, the gap allowing the entry of gas produced when an abnormality develops in the battery so as to activate the CID. Those skilled in the art will understand that, in a preferred embodiment, the boss structure 122 may be formed by a bottom portion of the upward recess 121, the boss structure 122 protruding from a lower surface of the anti-explosion valve plate 12 (see Fig. 4); correspondingly, the downward recess 131 is a pit-like structure (preferably a cylindrical recess) formed at a central position on the perforated plate 13, and an upper surface of the perforated plate 13 is a single flat surface (see Figs. 5 and 6). In another preferred embodiment, although not shown but as those skilled in the art will understand, the boss structure may be formed by a top portion of the downward recess 131, the boss structure protruding from an upper surface of the perforated plate 13; correspondingly, the upward recess 121 is a pit-like structure (preferably a cylindrical recess) formed at a central position on the anti-explosion valve plate 12, and a lower surface of the anti-explosion valve plate 12 is a single flat surface.

In a preferred embodiment, a thickness of the inner washer bottom portion 141 is slightly greater than a height of the boss structure 122, i.e. the anti-explosion valve plate 12 and the perforated plate 13 will apply a certain compression force to the inner washer bottom portion 141, so as to improve peripheral sealing between the anti-explosion valve plate 12 and the perforated plate 13.

The above design ensures battery sealing performance while making the structure formed by the top cover 11, the anti-explosion valve plate 12, the perforated plate 13 and the inner washer 14 more compact, thus reducing the amount of space taken up.

In a further preferred embodiment, the downward recess 131 and the upward recess 121 are connected by welding, e.g. spot welding, so as to have a certain connection strength and good electrical conductivity. The connection strength must satisfy the condition that when a given amount of gas is produced by abnormal battery use, the two recesses can be separated, i.e. the CID activates and open-circuits the battery.

In addition, in order to accomplish flipping of the anti-explosion valve plate 12 at a given gas pressure more effectively, in a preferred embodiment, as shown in Fig. 4, an annular anti-explosion groove 123 is provided on an upper surface of the anti-explosion valve plate 12. Dimensions such as the depth of the anti-explosion groove 123 must satisfy the condition that when a given amount of gas is produced by abnormal battery use, flipping of the anti-explosion valve plate 12 can be achieved, or even splitting of the anti-explosion groove 123 and discharge of gas, to prevent battery explosion.

In a further preferred embodiment, as shown in Fig. 6, an annular perforated plate anti-explosion groove 132 is provided on a bottom portion of the downward recess 131; when a given amount of gas is produced by abnormal battery use, the downward recess 131 can be caused to sink downward, so as to separate the downward recess 131 and the upward recess 121 more effectively.

Continuing to refer to Figs. 3-4, the top cover 11 according to the present invention is provided with a vent hole for relieving pressure; this is a conventional structure in the art, which is not specifically defined in the present invention. The special design of the structure of the anti-explosion valve plate 12 in the present invention enables the anti-explosion valve plate 12 to occupy less space when flipping upward, and can thus reduce the height of the top cover 11. In addition, to achieve a given level of sealing between the anti-explosion valve plate 12 and the top cover 11, they are connected by a line weld 112; the line weld 112 surrounds the centers of the anti-explosion valve plate 12 and the top cover 11, and the line weld 112 may be continuous or segmented, preferably continuous.

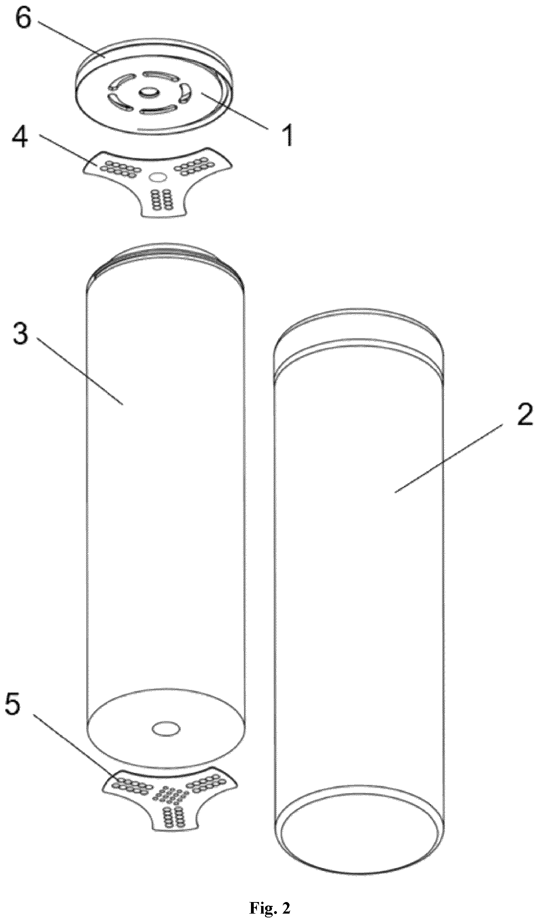

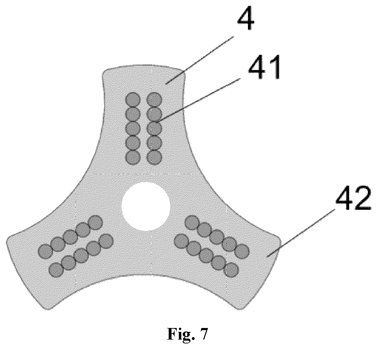

To partially solve problems in the prior art such as a positive electrode collector plate having a complex structure, a folded extension part taking up space inside a battery, and a welded area being small, another aspect of the present invention provides a structure of a positive electrode collector plate. As shown in Figs. 2 and 7, in an embodiment, the battery with no roll groove according to the present invention further comprises a positive electrode collector plate 4, the positive electrode collector plate 4 comprising a rolled core connecting part 41 connected to the rolled core 3, and a cap connecting part 42 connected to the cap 1, the cap connecting part 42 being located at the periphery of the rolled core connecting part 41. The connection between the cap connecting part 42 and the cap 1 is specifically a connection between the cap connecting part and the perforated plate 13 of the cap 1.

In such an embodiment, in order to fix and electrically connect the perforated plate 13 to the positive electrode collector plate 4 (the cap connecting part 42), the perforated plate 13 is connected to the positive electrode collector plate 4 (the cap connecting part 42) by a line weld 133 (as shown in Fig. 5).

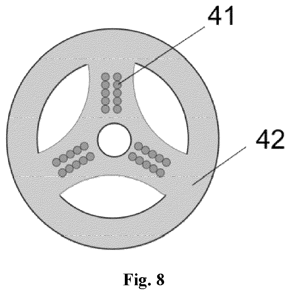

To achieve a more secure weld between the perforated plate 13 and the positive electrode collector plate 4 (the cap connecting part 42), in a preferred embodiment, as shown in Fig. 8, the cap connecting part 42 is annular. The dimensions of the annular cap connecting part 42 need not be specifically defined, as long as the abovementioned effect can be achieved.

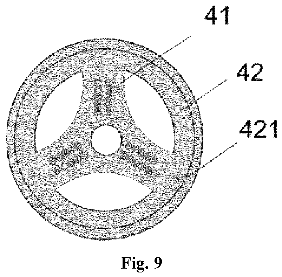

In a further preferred embodiment, as shown in Fig. 9, an annular ridge 421 is provided on the annular cap connecting part 42. In such an embodiment, the perforated plate 13 and the positive electrode collector plate 4 (the cap connecting part 42) are connected by welding, and a trace 133 of the weld (as shown in Fig. 5) is located on the ridge 421. This method of welding can achieve a more secure electrical connection between the perforated plate 13 and the positive electrode collector plate 4.

According to another aspect of the present invention, in a non-limiting embodiment, the present invention provides a method for preparing a battery with no roll groove, the method comprising the following steps:
step 1, accommodating a rolled core 3 in a casing 2, and connecting and fixing a positive electrode collector plate 4 to the rolled core 3 by welding;
step 2, placing a perforated plate 13 on a top portion of the positive electrode collector plate 4, and connecting and fixing the perforated plate 13 to the positive electrode collector plate 4 by welding;
step 3, placing an anti-explosion valve plate 12 in an inner washer 14, placing the inner washer 14 on a top portion of the perforated plate 13, and connecting and fixing an upward recess 121 of the anti-explosion valve plate 12 to a downward recess 131 of the perforated plate 13 by welding;
step 4, placing a top cover 11 on a top portion of the anti-explosion valve plate 12, and connecting and fixing the top cover 11 to the anti-explosion valve plate 12 by welding;
step 5, fitting an outer washer 6 over and around the top cover 11, such that a lower surface of an outer washer top portion 61 is fitted against a protruding edge 111 of the top cover 11, and such that an outer washer bottom portion 63 presses against the periphery of a top portion of the perforated plate 13 and/or the rolled core 3;
step 6, bending a top portion of the casing 2 inward by stamping, to cover the outer washer top portion 61 and apply a downward action force thereto, thereby accomplishing sealing between the cap 1 and the casing 2.

In another non-limiting embodiment, the present invention provides a method for preparing a battery with no roll groove, the method comprising the following steps:
step 1, assembling a top cover 11, an anti-explosion valve plate 12, an inner washer 14 and a perforated plate 13 to form a cap 1;
step 2, accommodating a rolled core 3 in a casing 2, and connecting and fixing a positive electrode collector plate 4 to the rolled core 3 by welding;
step 3, placing the perforated plate 13 of the cap 1 on a top portion of the positive electrode collector plate 4, and connecting and fixing the perforated plate 13 to the positive electrode collector plate 4 by welding;
step 4, fitting an outer washer 6 over and around the top cover 11, such that a lower surface of an outer washer top portion 61 is fitted against a protruding edge 111 of the top cover 11, and such that an outer washer bottom portion 63 presses against the periphery of a top portion of the perforated plate 13 and/or the rolled core 3;
step 5, bending a top portion of the casing 2 inward by stamping, to cover the outer washer top portion 61 and apply a downward action force thereto, thereby accomplishing sealing between the cap 1 and the casing 2.

The above description of various embodiments of the present invention is provided to a person skilled in the art for descriptive purposes. It is not intended that the present invention be exclusive or limited to a single disclosed embodiment. Those skilled in the field of the above teaching will understand various replacements and variants of the present invention. Thus, although some alternative embodiments have been specifically described, those skilled in the art will understand, or develop with relative ease, other embodiments. The present invention is intended to include all replacements, modifications and variants of the present invention described herein, as well as other embodiments falling within the spirit and scope of the present invention described above.

## Claims

1. A battery, wherein it comprises: a cap (1), an outer washer (6), a casing (2) and a rolled core (3),
wherein the rolled core (3) is accommodated in the casing (2), and the cap (1) is electrically connected to the rolled core (3);
a top portion of the casing (2) is bent inward and tightly presses the outer washer (6) against the cap (1), thereby fixing the rolled core (3) in the casing (2);
the casing (2) has no roll groove structure.

2. The battery as claimed in claim 1, wherein the outer washer (6) comprises:
an outer washer top portion (61), the outer washer top portion (61) being an annular structure, and the cap (1) being exposed through a central round opening;
an outer washer bottom portion (63), disposed between the cap (1) and the casing (2).

3. The battery as claimed in claim 1, wherein the cap (1) comprises:
a top cover (11);
an anti-explosion valve plate (12), the anti-explosion valve plate (12) being provided below the top cover (11) and electrically connected to the top cover (11);
a perforated plate (13), the perforated plate (13) being provided below the anti-explosion valve plate (12); the perforated plate (13) and the anti-explosion valve plate (12) being electrically connected at a central position, and separated by a gap at a peripheral position;
an inner washer (14), the inner washer (14) being used to seal the gap between the peripheries of the anti-explosion valve plate (12) and the perforated plate (13);
preferably, the perforated plate (13), the top cover (11) and the anti-explosion valve plate (12) have successively decreasing peripheral dimensions;
preferably, an annular anti-explosion groove (123) is provided on an upper surface of the anti-explosion valve plate (12).

4. The battery as claimed in claim 3, wherein the inner washer (14) comprises an inner washer bottom portion (141) and an inner washer side wall (142); the inner washer bottom portion (141) is an annular structure, and a top portion of the inner washer side wall (142) is press-fitted against a lower surface of the top cover (11).

5. The battery as claimed in claim 4, wherein a height of the inner washer side wall (142) is slightly greater than a thickness of the anti-explosion valve plate (12), and an inside diameter of the inner washer side wall (142) is slightly smaller than a diameter of the anti-explosion valve plate (12).

6. The battery as claimed in claim 2, wherein the outer washer (6) further comprises an outer washer side wall (62), the outer washer side wall (62) being used to connect the outer washer top portion (61) and the outer washer bottom portion (63).

7. The battery as claimed in claim 3, wherein the periphery of the top cover (11) is provided with an annular upward protruding edge (111), and a top portion of the protruding edge (111) is press-fitted against a lower surface of the outer washer top portion (61).

8. The battery as claimed in claim 7, wherein the top portion of the casing (2) is bent inward and tightly presses the outer washer (6) against the top portion of the protruding edge (111) and an upper surface of the top cover (11) located close to the protruding edge (111).

9. The battery as claimed in claim 7, wherein the lower surface of the outer washer top portion (61) is provided with an annular downward protrusion (64), the protrusion (64) being located at an inner side of the protruding edge (111); preferably, the top portion of the casing (2) is bent inward and tightly presses the protrusion (64) against a side wall of the protruding edge (111).

10. The battery as claimed in claim 1, wherein an outer diameter of an upper part of the outer washer (6) is smaller than an outer diameter of a lower part thereof, and an outer surface of the upper part of the outer washer (6) is connected to an outer surface of the lower part thereof by an oblique face (65).

11. The battery as claimed in claim 8 or 9, wherein after the casing (2) is bent, the outer washer (6) has a part projecting beyond the casing (2).

12. The battery as claimed in claim 3, wherein an upward recess (121) is provided at a central position on the anti-explosion valve plate (12), a downward recess (131) is provided at a central position on the perforated plate (13), the downward recess (131) and the upward recess (121) are connected by welding, and the upward recess (121) or the downward recess (131) has a boss structure (122); a thickness of the inner washer bottom portion (141) is slightly greater than a height of the boss structure (122).

13. The battery as claimed in claim 3, wherein the anti-explosion valve plate (12) and the top cover (1) are connected by a line weld (112), the line weld (112) being continuous or segmented; preferably, an annular ridge (421) is provided on the cap connecting part; preferably, the perforated plate (13) and the ridge (421) are connected by welding, and a weld trace is located on the ridge (421).

14. The battery as claimed in claim 1, wherein it further comprises a positive electrode collector plate (4), the positive electrode collector plate (4) comprising a rolled core connecting part connected to the rolled core (3), and a cap connecting part connected to the cap (1), the cap connecting part being located at the periphery of the rolled core connecting part.

15. The battery as claimed in claim 13, wherein the perforated plate (13) and the cap connecting part of the positive electrode collector plate (4) are connected by welding.
